# EUROPEAN PATENT APPLICATION

(11) **EP 4 668 012 A1**
(43) Date of publication of application: **24.12.2025**
(21) Application number: 25179797.3
(22) Date of filing: 30.05.2025
(51) Int. Cl.: G03B 15/03, G03B 15/04, G03B 15/05

(54) **CONTROL APPARATUS, ILLUMINATION APPARATUS, ILLUMINATION SYSTEM, CONTROL METHOD, AND PROGRAM**

(30) Priority: 18.06.2024 JP 2024097798
(71) Applicant: CANON KABUSHIKI KAISHA, Tokyo 146-8501 (JP)
(72) Inventor: YAMAMOTO, Yutaka, Tokyo,, 146-8501 (JP)
(74) Representative: TBK

(57) **Abstract**

A control apparatus (300) configured to control at least one illumination apparatus (400) through wireless communication includes a communication unit (302) configured to perform the wireless communication with the at least one illumination apparatus, an operation unit (303) configured to accept an operation regarding setting of an illumination apparatus belonging to a predetermined group among the at least one illumination apparatus, and a control unit (301) configured to issue an instruction regarding the setting to the illumination apparatus belonging to the predetermined group through the communication unit in accordance with the operation, and instruct the illumination apparatus to notify that the illumination apparatus belongs to the predetermined group.

## Description

### TECHNICAL FIELD

The present disclosure relates to a control apparatus, an illumination apparatus, an illumination system, and a control method, and a program.

### BACKGROUND

A multi-light illumination apparatus control system has conventionally been known, which includes a sender illumination apparatus attached to an image pickup apparatus and a receiver illumination apparatus communicable with the sender illumination apparatus through wireless communication, and performs illumination during imaging by using these illumination apparatuses. In such a multi-light illumination apparatus control system, a technology is also known in which a plurality of illumination apparatuses are divided into groups and setting is performed for each group. Japanese Patent Application Laid-Open No. 2013-160788 discloses a technology in which, in order to reduce unnecessary communication operations from the sender illumination apparatus, transmission operations are not performed to a group to which no receiver illumination apparatus is assigned.

Due to the technology disclosed in Japanese Patent Application Laid-Open No. 2013-160788, a photographer can recognize, through a notification displayed on the sender illumination apparatus, a group to which no receiver illumination apparatus is assigned, but cannot identify which group is assigned to which receiver illumination apparatus. Thus, the photographer is to either memorize which group has been assigned to each receiver illumination apparatus or go to the location of a receiver illumination apparatus placed at a separated place to check the assigned group by using an operation member or display member of the illumination apparatus.

### SUMMARY

The present disclosure in its first aspect provides a control apparatus as specified in claims 1 to 6.

The present disclosure in its second aspect provides an illumination apparatus as specified in claims 7 and 8.

The present disclosure in its third aspect provides an illumination system as specified in claims 9 and 10.

The present disclosure in its fourth aspect provides a control method as specified in claims 11 to 13.

The present disclosure in its fifth aspect provides a program as specified in claims 14 to 16.

Further features of various embodiments of the disclosure will become apparent from the following description of embodiments with reference to the attached drawings.

### DESCRIPTION OF THE DRAWINGS

FIG. 1 is a schematic diagram of a multi-light illumination apparatus control system according to each embodiment.
FIG. 2 is a block diagram of the multi-light illumination apparatus control system according to each embodiment.
FIGs. 3A and 3B are exterior diagrams of an illumination apparatus according to each embodiment.
FIG. 4 is a flowchart illustrating processing of a sender illumination apparatus according to a first embodiment.
FIG. 5 is a flowchart illustrating processing of a receiver illumination apparatus according to the first embodiment.
FIG. 6 is a flowchart illustrating processing of the sender illumination apparatus according to the first embodiment.
FIG. 7 is a flowchart illustrating processing of the receiver illumination apparatus according to the first embodiment.
FIGs. 8A and 8B are exterior diagrams of the sender illumination apparatus and the receiver illumination apparatus according to the first embodiment.
FIG. 9 is a flowchart illustrating processing of a sender illumination apparatus according to a second embodiment.
FIG. 10 is a flowchart illustrating processing of a receiver illumination apparatus according to the second embodiment and a third embodiment.
FIG. 11 is a flowchart illustrating processing of a sender illumination apparatus according to the third embodiment.
FIG. 12 is a schematic diagram of the sender illumination apparatus according to the third embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments according to the present disclosure.

First, an outline of each embodiment will be described below. Each embodiment relates to a multi-light illumination apparatus control system (illumination system) configured to perform wireless communication with a plurality of illumination apparatuses by electric waves, light, or the like, and perform illumination during imaging using the plurality of illumination apparatuses. A photographer installs a plurality of illumination apparatuses around an object and performs imaging with light emission from various directions. In this case, a desired light emission amount can be set to each illumination apparatus through wireless communication to perform light emission at a proper imaging timing. Thereby, the photographer can perform imaging in which intended light and shadow are cast on the object.

Such a multi-light illumination apparatus control system includes a sender illumination apparatus and a receiver illumination apparatus. The sender illumination apparatus is mounted on an image pickup apparatus and performs light emission and transmission of a light emission control signal including a light emission timing and a light emission amount during imaging to each illumination apparatus. Each receiver illumination apparatus is disposed around the object and performs light emission by receiving a light emission signal from the sender illumination apparatus. A group setting is performed so that the receiver illumination apparatuses are grouped into light emission groups such as Group A and Group B, and information can be transmitted from the sender illumination apparatus for each group unit. In each receiver illumination apparatus, a group to which the receiver illumination apparatus belongs is set by an operation performed on an operation member of the receiver illumination apparatus.

The photographer can recognize, through a notification displayed on the sender illumination apparatus, a group to which no receiver illumination apparatus is assigned, but cannot recognize which group is assigned to which receiver illumination apparatus. Thus, each embodiment provides a multi-light illumination apparatus control system for enabling the photographer to easily recognize a group set to an illumination apparatus, for example.

### FIRST EMBODIMENT

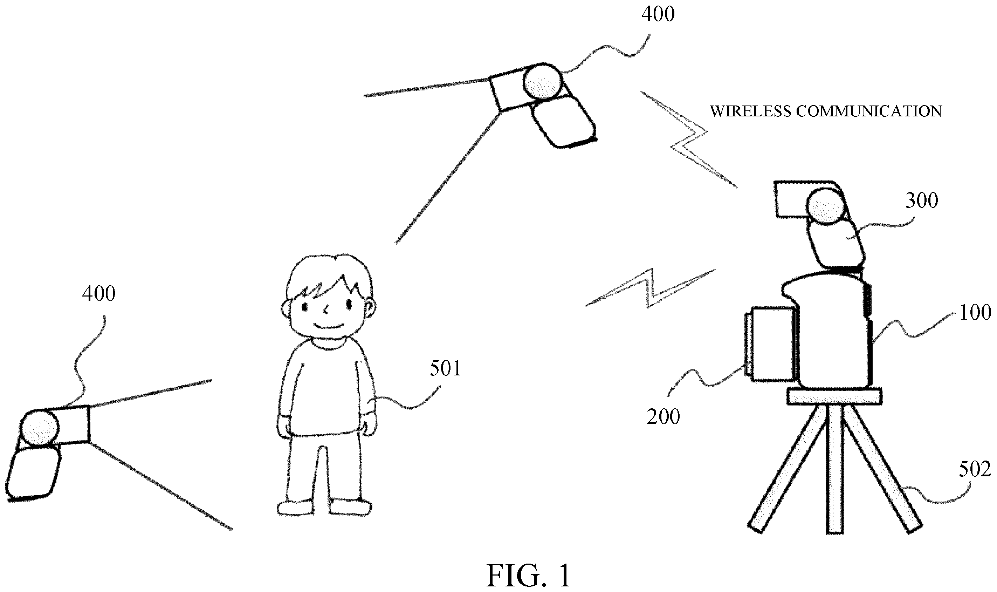

FIG. 1 is a schematic diagram illustrating a strobe control system according to a first embodiment of the present disclosure. The strobe control system according to this embodiment is a multi-light illumination apparatus control system including an image pickup apparatus (digital single-lens reflex camera) 100, a sender illumination apparatus 300 directly connected to the image pickup apparatus 100, and a plurality of receiver illumination apparatuses 400 independent of the image pickup apparatus 100.

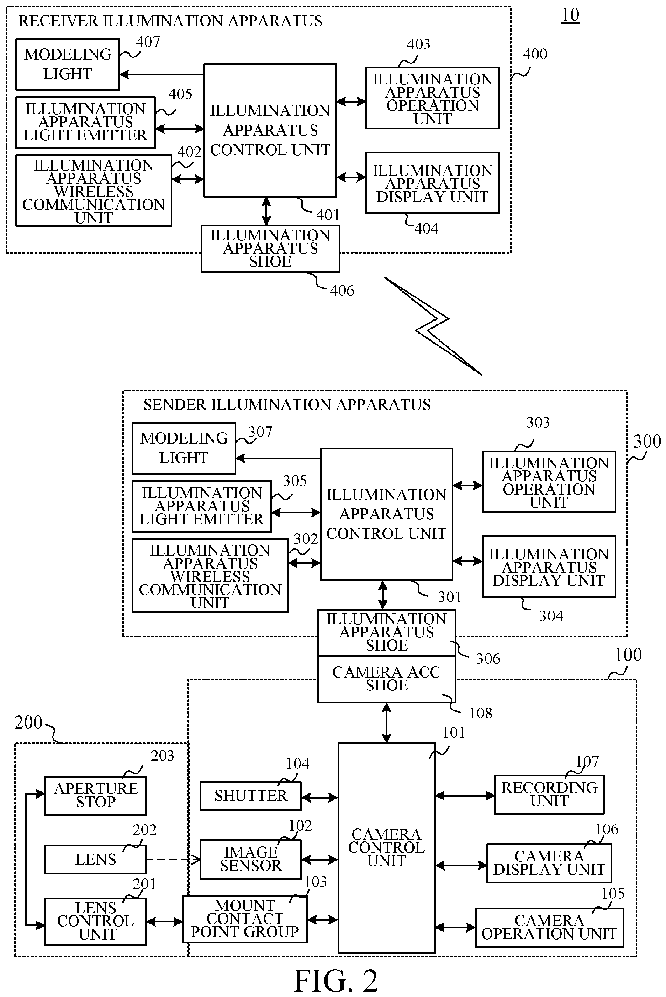

FIG. 2 is a block diagram of a multi-light illumination apparatus control system (illumination system) 10 including the image pickup apparatus 100, the sender illumination apparatus 300, and the receiver illumination apparatus 400. The sender illumination apparatus 300 directly connected to a connector of the image pickup apparatus 100 can mutually communicate with the image pickup apparatus 100 through the connector and includes a wireless communication circuit and a wireless antenna. Similarly to the sender illumination apparatus 300, each receiver illumination apparatus 400 independent of the image pickup apparatus 100 includes a wireless communication circuit and a wireless antenna. The sender illumination apparatus 300 and each receiver illumination apparatus 400 perform wireless communication using a known wireless communication protocol such as IEEE 802.15.4.

The sender illumination apparatus 300 is a control apparatus configured to control at least one receiver illumination apparatus 400 through wireless communication. Each receiver illumination apparatus 400 is an illumination apparatus that is controlled by the sender illumination apparatus 300 through wireless communication.

FIG. 1 assumes strobe imaging in a photo studio, in which the image pickup apparatus 100 is fixed on a tripod 502 relative to an object 501. In this embodiment, the sender illumination apparatus 300 connected to the image pickup apparatus 100 serves as a sender device, and each receiver illumination apparatus 400 independent of the image pickup apparatus 100 serves as a receiver device. In such a configuration, strobe-synchronized imaging is performed in which light emission timings of the sender illumination apparatus 300 and each receiver illumination apparatus 400 are synchronized with a shutter timing of the image pickup apparatus 100.

In this embodiment, the sender illumination apparatus 300 connected to the image pickup apparatus 100 is described as a sender device, but a device connected to the image pickup apparatus 100 may be replaced with a dedicated transmitter capable of wireless communication. In a case where the camera itself includes a wireless communication circuit and a wireless antenna and can perform wireless communication, a system may be formed in which the camera serves as a sender device and transfers an instruction to each receiver illumination apparatus 400 through wireless communication.

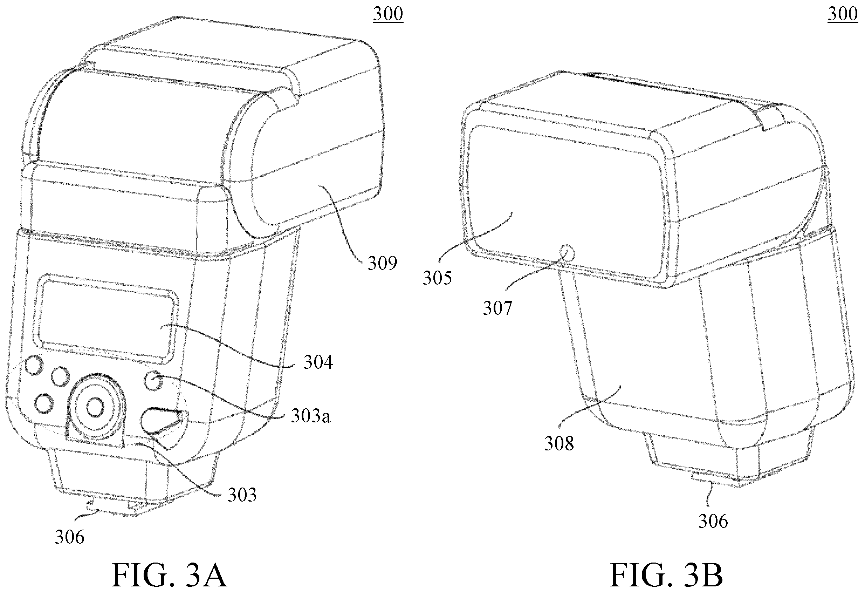

This embodiment will be described below with reference to a block diagram in FIG. 2 and an exterior diagram of an illumination apparatus in FIGs. 3A and 3B. Referring now to FIG. 2, a description will be given of a schematic configuration of the multi-light illumination apparatus control system 10 that includes the image pickup apparatus 100, the sender illumination apparatus (transmitting side) 300, and each receiver illumination apparatus (receiving side) 400.

Reference number 100 denotes an image pickup apparatus (camera), and an imaging lens (lens apparatus) 200 is mounted on the front surface of the image pickup apparatus 100. The imaging lens 200 is interchangeable and electrically connected to the image pickup apparatus 100 through a mount contact point group 103. A camera ACC shoe 108 is disposed on the upper surface of the image pickup apparatus 100 and can be connected with various accessories including shoes to communicate with an external accessory through an unillustrated contact point group provided in the camera ACC shoe 108.

Reference number 101 denotes a camera control unit as a microcomputer that controls operation of each component of the image pickup apparatus 100. The camera control unit 101 includes a built-in memory for storing various adjustment values, computer programs for executing various kinds of control, and the like. The built-in memory also functions as a buffer memory that temporarily stores various kinds of data processed at different places.

Reference number 102 denotes an image sensor configured to convert light incident from an object through a lens 202 into an electric signal to generate an image signal including a still image or a moving image and outputs the image signal to the camera control unit 101. Reference number 104 denotes a shutter (focal plane shutter) that is disposed between the image sensor 102 and the lens 202 and operates based on an instruction from the camera control unit 101. The shutter 104 includes a front curtain and a rear curtain, and exposure of the image sensor 102 starts when the front curtain moves and the shutter opens, whereas exposure of the image sensor 102 ends when the rear curtain moves and the shutter closes.

Reference number 105 denotes a camera operation unit that includes an operation member to be operated by a user, detects an operation performed by the user through a button, a switch, a dial, a connected instrument, or the like attached to the image pickup apparatus 100, and transfers a signal in accordance with an operation instruction to the camera control unit 101. For still image capturing, the camera operation unit 105 outputs, to the camera control unit 101, an instruction signal (SW1 signal) generated when the user performs a half-press operation of a release button, and an instruction signal (SW2 signal) generated when the user performs a full-press operation of the release button. For moving image capturing, the camera operation unit 105 outputs, to the camera control unit 101, an instruction signal (hereinafter referred to as a REC signal) generated when the user operates a recording button.

Reference number 106 denotes a camera display unit that displays imaging information and captured images based on an instruction from the camera control unit 101. Reference number 107 denotes a recording unit that records captured images and performs image recording through an interface for an unillustrated storage medium such as a memory card or a hard disk drive.

The camera control unit 101 performs operation control of the image pickup apparatus 100 based on an output signal from the camera operation unit 105. In a case where the output signal from the camera operation unit 105 is the SW1 signal, the image sensor 102 is driven to perform imaging and outputs focus information such as a defocus amount for each distance measurement point. In addition, photometric control (AE operation) is repeated which detects an object from the imaging result and measures the luminance of the object, and a shutter speed, an aperture value (F-number), and an ISO speed (or sensitivity) to be used during imaging are determined from the photometric result. The shutter speed, the aperture value, and the ISO speed to be used during imaging will be collectively referred to as exposure control values. The determined exposure control values are displayed on a screen of the camera display unit 106. In a case where the output signal from the camera operation unit 105 is the SW2 signal, an aperture stop 203 in the lens 202 is driven, the sensitivity (ISO speed) of the image sensor 102 is set, and the shutter 104 is controlled to irradiate the image sensor 102 with light.

In a case where the output signal from the camera operation unit 105 is the REC signal, the sensitivity (ISO speed) and frame rate of the image sensor 102 are set and the image sensor 102 is driven to perform imaging and focus information such as a defocus amount for each focus detecting point is output. In addition, the image sensor 102 is irradiated with light while photometric control (AE operation) is repeated, which detects an object from the imaging result and measures the luminance of the object. A lens control unit 201 to be described later drives a focus lens (not illustrated) for adjusting focus in the lens 202 and repeats autofocus in accordance with an instruction from the camera control unit 101. The camera control unit 101 performs control to display a captured image on the screen of the camera display unit 106 in accordance with image data acquired from the image sensor 102 and write image data (including sound information) into the memory 107.

The configuration of the imaging lens 200 will be described below. Reference number 201 denotes a lens control unit as a microcomputer that controls operation of each component in the imaging lens 200. Reference number 202 denotes a lens that includes a plurality of lens units and forms an object image on the image sensor 102. The lens 202 further includes the aperture stop 203 for adjusting a light amount and the focus lens (not illustrated) for focusing. The lens control unit 201 adjusts the light amount taken into the camera and focus by control through the mount contact point group 103 in accordance with an instruction from the camera control unit 101, and transfers distance information and the like at that time to the camera control unit 101.

Referring now to FIGs. 2, 3A, and 3B, a description will be given of the configurations of the sender illumination apparatus 300 and each receiver illumination apparatus 400. The sender illumination apparatus 300 is a light emission control apparatus in this embodiment. The sender illumination apparatus 300 and each receiver illumination apparatus 400 have the same configuration, and thus a description will be made based on the sender illumination apparatus 300, and a specific description will be made on any point with difference in function and operation. In the description, reference numbers 301 to 307 in the configuration of the sender illumination apparatus 300 to be described later correspond to reference numerals 401 to 407, respectively, in the configuration of each receiver illumination apparatus 400.

Reference number 301 denotes an illumination apparatus control unit as a microcomputer that controls operation of each component of the sender illumination apparatus 300. The illumination apparatus control unit 301 receives a light emission instruction from the image pickup apparatus 100 through an illumination apparatus shoe 306 and performs light emission by an illumination apparatus light emitter 305 and transmission and reception of camera information and illumination apparatus information. The illumination apparatus control unit 301 also transmits and receives imaging control signals such as imaging start and end commands, and other information. The illumination apparatus control unit 301 can perform wireless communication with an illumination apparatus wireless communication unit (communication unit or second communication unit) 402 of each receiver illumination apparatus 400 through an illumination apparatus wireless communication unit 302 to be described later. The illumination apparatus control unit 301 also performs light emission of the receiver illumination apparatus 400 based on a light emission instruction from the image pickup apparatus 100 and transmission and reception of information and the like among illumination apparatuses.

An illumination apparatus control unit 401 of each receiver illumination apparatus 400, which corresponds to the illumination apparatus control unit 301, can communicate with the sender illumination apparatus 300 through the illumination apparatus wireless communication unit 402. Each receiver illumination apparatus 400 can receive a light emission instruction from the sender illumination apparatus 300 and perform light emission by an illumination apparatus light emitter 405, information acquisition by the sender illumination apparatus 300, and transmission and reception of information such as setting of a light emission amount and the like and charge completion of the receiver illumination apparatus 400.

Reference number 302 denotes an illumination apparatus wireless communication unit (communication unit or first communication unit) that is a wireless communication module such as an infrared communication module, a Bluetooth (registered trademark) communication module, or a wireless LAN communication module. The illumination apparatus wireless communication unit 302 performs wireless communication with a receiver illumination apparatus 400 belonging to a predetermined group among the receiver illumination apparatuses 400.

Reference number 303 denotes an illumination apparatus operation unit (selection unit or operation unit) that includes an operation member to be operated by the user, detects an operation performed by the user through a button, a dial, or the like attached to the sender illumination apparatus 300, and transfers a signal in accordance with an operation instruction to the illumination apparatus control unit 301. The illumination apparatus operation unit 303 receives an operation (operation such as setting change) regarding setting of a receiver illumination apparatus 400 belonging to a selected group (predetermined group) among the receiver illumination apparatuses 400. Then, the illumination apparatus control unit 301 issues an instruction regarding the setting of the receiver illumination apparatus 400 to the receiver illumination apparatus 400 belonging to the predetermined group through the communication unit in accordance with the operation.

One button, for example, an operation button 303a in the illumination apparatus operation unit 303 illustrated in FIG. 3A includes an LED illumination to perform lighting representing charge completion of the sender illumination apparatus 300 and information display, and constitutes one of notifying units in this embodiment. The operation button 303a can display various notifications by performing light emission (lighting) and flashing based on an instruction from the illumination apparatus control unit 301.

Reference number 304 denotes an illumination apparatus display unit. The illumination apparatus display unit 304 is an LCD display panel that performs, based on an instruction from the illumination apparatus control unit 301, information display of setting information such as a light emission amount set to the sender illumination apparatus 300 and a wireless communication setting, a camera communication state, a connection state with the receiver illumination apparatuses 400, and the like. The illumination apparatus display unit 304 includes a backlight that illuminates an LCD so that displayed information can be viewed even in dark environments, and constitutes one of notifying units that perform lighting and flashing with a backlight in this embodiment.

A light emission group setting and light emission amount setting in the multi-light illumination apparatus control system 10 will be described below. The photographer sets the sender illumination apparatus 300 through the illumination apparatus operation unit 303 while viewing various kinds of setting information on the illumination apparatus display unit 304. In the multi-light illumination apparatus control system, in setting the receiver illumination apparatuses 400, the photographer configures setting on the receiver illumination apparatus 400 side to a receiver state in wireless setting, thereby setting wireless connection and enabling wireless communication with the sender illumination apparatus 300. The photographer also sets light emission groups for light emission on the receiver illumination apparatuses 400.

Once the light emission groups are set, light is emitted at (normal) light emission for imaging in accordance with light emission amount setting instructed for each light emission group by the sender illumination apparatus 300 and a light emission instruction. It is assumed that this embodiment can set the light emission groups to three groups referred to as A, B, and C. Preparing a plurality of light emission groups can differentiate the light emission amounts of the illumination apparatuses in a case where the illumination apparatuses are disposed as illustrated in FIG. 1. Thereby, an object can be imaged with illumination desired by the photographer. This embodiment is not limited to this number of groups and the number of groups may be two or less or four or more.

In setting the illumination apparatuses on the sender side, the photographer sets a sender state using the wireless setting on the sender illumination apparatus 300 side to establish wireless connection with the receiver illumination apparatuses 400. The photographer sets a light emission amount for each light emission group on the sender illumination apparatus 300 side. Thereby, in (normal) light emission for imaging, the illumination apparatuses perform light emission in accordance with light emission amount settings for the respective light emission groups, and perform imaging with desired multi-light illumination.

Reference number 305 denotes an illumination apparatus light emitter that receives a light emission operation instruction from the illumination apparatus control unit 301 and emits light with a designated light emission timing and a light emission amount. The illumination apparatus light emitter 305 mainly includes a discharge tube, a reflector umbrella, a zoom optical system, and the like, which are not illustrated, and can change a light emission irradiation range through movement of the zoom optical system.

The illumination apparatus shoe 306 is a connector connectable to the camera ACC shoe 108 in the image pickup apparatus 100. Through an unillustrated contact point group included in the illumination apparatus shoe 306, the illumination apparatus shoe 306 can communicate with the camera control unit 101 of the image pickup apparatus 100 to transmit and receive light emission information from the camera and information on the illumination apparatuses.

Reference number 307 denotes a modeling light constituted by an unillustrated LED or modeling lens. As illustrated in FIG. 3B, the modeling light 307 is disposed at the same location as that of the illumination apparatus light emitter 305. Thus, the modeling light 307 is configured to have an irradiation range approximately equivalent to the irradiation range of the illumination apparatus light emitter 305 and have an irradiation center disposed near the irradiation center of the illumination apparatus light emitter 305. Before performing light emission from the illumination apparatus light emitter 305, the photographer checks illumination conditions and shadow appearance on an object by irradiating the object light from the modeling light 307 and determines the illumination direction of the illumination apparatus 300 and the like by assuming shadows in light emission from the illumination apparatus light emitter 305.

When operated by the photographer through the illumination apparatus operation unit 303, the modeling light 307 turns on and off an LED under control by the illumination apparatus control unit 301 and switches between light emission and non-light emission. The modeling light 307 constitutes one of notifying units in this embodiment. When used as a modeling light 407 of each receiver illumination apparatus 400, the modeling light 307 performs display such as LED flashing after the illumination apparatus control unit 401 receives a signal from the sender illumination apparatus 300 through the illumination apparatus wireless communication unit 402.

In a case where the photographer selects a particular group on the illumination apparatus operation unit 303 of the sender illumination apparatus 300 through an operation to be described later, the notifying unit of any receiver illumination apparatus 400 set to the group lights or flashes. This configuration can notify the photographer of any illumination apparatus assigned to the selected group.

Reference number 308 denotes an illumination apparatus body on which the illumination apparatus operation unit 303 and the illumination apparatus display unit 304 are mounted as illustrated in FIG. 3A. The illumination apparatus body 308 includes the illumination apparatus control unit 301 mounted on an unillustrated substrate, an unillustrated battery power source, and the like. Reference number 309 denotes an illumination apparatus head portion on which the illumination apparatus light emitter 305 and the modeling light 307 are mounted as illustrated in FIG. 3A.

As illustrated in FIGs. 3A and 3B, the illumination apparatus body 308 and the illumination apparatus head portion 309 are separated, and the illumination apparatus head portion 309 is rotatably held relative to the illumination apparatus body 308. Thereby, the illumination apparatus light emitter 305 can be configured as an irradiation direction variable unit that provides bounce imaging that emits light toward a ceiling or a wall in a predetermined direction.

The sender illumination apparatus 300 is connected to the camera ACC shoe 108 and attached to the image pickup apparatus 100. Thus, in a case where an illumination apparatus is used as the sender illumination apparatus 300, the photographer turns on the modeling light 307 and determines the irradiation direction of the illumination apparatus light emitter 305 by the above irradiation direction variable unit. In a case where an illumination apparatus is used as the receiver illumination apparatus 400, the photographer turns on the modeling light 407 while performing disposition of the receiver illumination apparatus 400 relative to the object 501 and determining the irradiation direction by the irradiation direction variable unit for the placement distant from the image pickup apparatus 100. In this embodiment, the modeling light 407 constitutes a notifying unit that notifies the photographer based on an instruction from the illumination apparatus control unit 401.

In the multi-light illumination apparatus control system 10 according to this embodiment, an operation button 403a, an illumination apparatus display unit 404, or the modeling light 407 as the notifying unit of the receiver illumination apparatus 400 may be disposed at a position that is easily recognizable by the photographer. Thereby, a group setting notification to be described later can be recognized by the photographer.

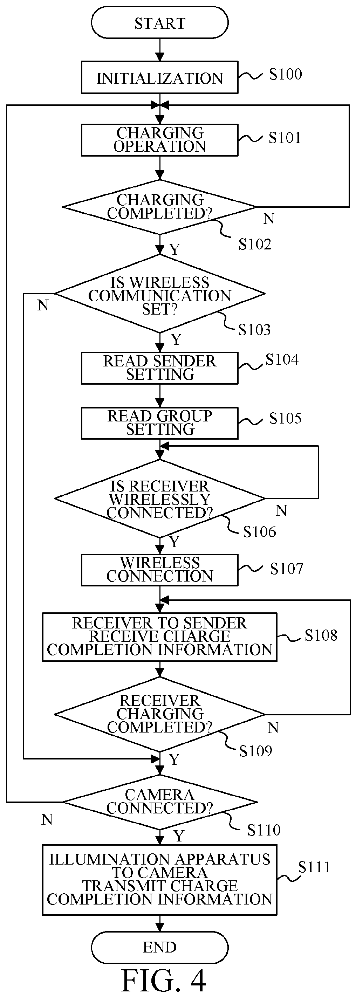

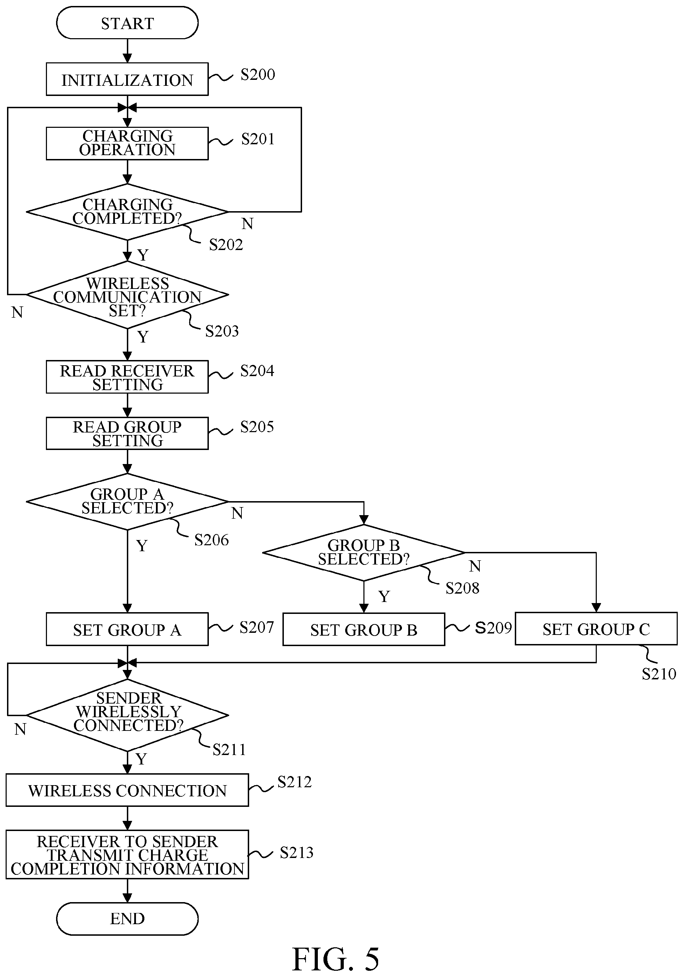

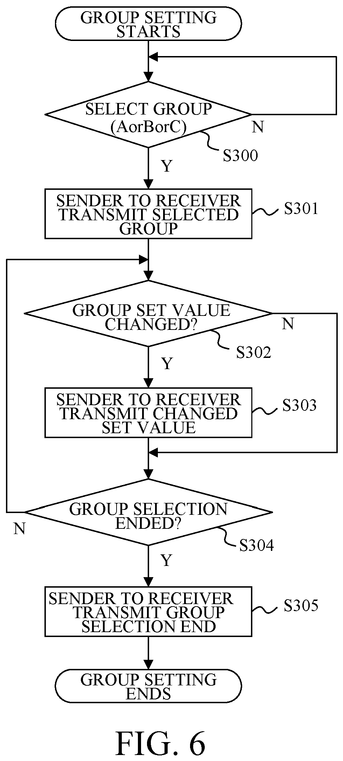

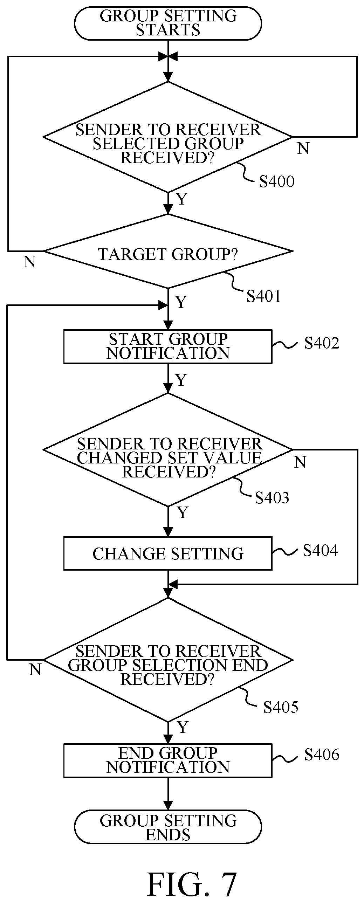

Referring now to FIGs. 4 to 7, a description will be given of processing (control method) of the multi-light illumination apparatus control system 10 according to this embodiment. The processing described below is processing performed in a case where the photographer establishes wireless connection with the receiver illumination apparatuses 400 using the sender illumination apparatus 300 connected to the image pickup apparatus 100 and sets a light emission amount of the receiver illumination apparatuses 400 assigned to groups and the like. FIGs. 4 and 6 illustrate processing of the sender illumination apparatus 300, and FIGs. 5 and 7 illustrate processing of each receiver illumination apparatus 400.

Referring now to FIG. 4, a description will be given of processing of the sender illumination apparatus 300 during wireless setting. FIG. 4 is a flowchart illustrating the processing of the sender illumination apparatus 300.

First in step S100, in the sender illumination apparatus 300, when a power switch of the illumination apparatus operation unit 303 illustrated in FIG. 3A is turned on and the unit becomes operable, the illumination apparatus control unit 301 performs initialization operations of memories and ports. In addition, the illumination apparatus control unit 301 reads a switch state input from the illumination apparatus operation unit 303 and input information previously set and performs various kinds of light emission setting including setting of a light emission mode, such as modulated light emission or manual light emission, and setting of a light emission value of the sender illumination apparatus 300.

Next, in step S101, the illumination apparatus control unit 301 performs charging processing in which a charging control unit charges an unillustrated main capacitor with electric charge for light emission from an unillustrated power supply unit. Next, in step S102, the illumination apparatus control unit 301 detects voltage of the electric charge in the unillustrated main capacitor to determine whether the main capacitor is in a charge completed state. In a case where it is determined that the main capacitor is in the charge completed state, the flow proceeds to step S103. In a case where it is determined that the main capacitor is not in the charge completed state, the flow returns to step S101 to continue charging. In a case where the main capacitor is in the charge completed state, light emission by the illumination apparatus light emitter 305 is possible.

In step S103, the illumination apparatus control unit 301 determines whether it is set to perform wireless communication. In a case where it is determined that wireless setting has been performed by the photographer through the illumination apparatus operation unit 303, the flow proceeds to step S104. In a case where it is determined that wireless communication setting has not been performed, the flow proceeds to step S110.

In step S104, the illumination apparatus control unit 301 performs the wireless setting in accordance with sender and receiver setting previously performed by the photographer through the illumination apparatus operation unit 303 and the illumination apparatus display unit 304 illustrated in FIG. 3A. This step assumes that sender setting has been performed by the photographer, and reads the sender setting. To perform the wireless communication through the illumination apparatus wireless communication unit 302, the illumination apparatus control unit 301 sets connection information such as a wireless ID and a CH for wireless communication, and sets the illumination apparatus as the sender illumination apparatus 300. In a case where the illumination apparatus is set as the sender illumination apparatus in step S104, the illumination apparatus (corresponding to the sender illumination apparatus 300) functions as an illumination apparatus capable of controlling a plurality of receiver illumination apparatuses 400 wirelessly connected in the multi-light illumination apparatus control system 10.

Next, in step S105, the illumination apparatus control unit 301 automatically sets a light emission group of the sender illumination apparatus 300 to Group A. In description of this embodiment, the group of the sender illumination apparatus 300 is automatically set to Group A, but the photographer may set the illumination apparatus to another optional group such as Group B or Group C or may set the illumination apparatus not to emit light as the sender illumination apparatus 300.

Next, in step S106, based on the wireless ID and the CH set in step S104, the illumination apparatus control unit 301 searches for any receiver illumination apparatus 400 that is provided with receiver setting and connectable with the same ID and CH. In a case where a wirelessly connectable receiver illumination apparatus 400 is found, the flow proceeds to step S107. In a case where no wirelessly connectable receiver illumination apparatus 400 is found, the search for any wirelessly connectable receiver illumination apparatus 400 is continued.

In step S107, the illumination apparatus control unit 301 establishes wireless connection with the receiver illumination apparatus 400 found in step S106. The illumination apparatus control unit 301 acquires group information (Group A, B, or C) set on the receiver illumination apparatus 400 side during the wireless connection as well as a strobe ID unique to the receiver illumination apparatus 400 or a settable item such as a maximum light emission amount, a zoom position, or the like. In a case where a plurality of receiver illumination apparatuses 400 are to be connected to the sender illumination apparatus 300, steps S106 and S107 are similarly repeated to perform connection processing with each receiver illumination apparatus 400.

Next, in step S108, the illumination apparatus control unit 301 performs wireless communication through the illumination apparatus wireless communication unit 302 to receive information indicating whether the receiver illumination apparatus 400 is in a charge completed state and can perform light emission. In a case where charge completion information is transmitted in step S212 on the receiver illumination apparatus 400 side to be described later, the illumination apparatus control unit 301 can receive the charge completion information.

Next, in step S109, the illumination apparatus control unit 301 determines whether the receiver illumination apparatus 400 is in the charge completed state based on the information acquired in step S108. In a case where it is determined that charging of the receiver illumination apparatus 400 has been completed, the flow proceeds to step S110. In a case where it is determined that charging of the receiver illumination apparatus 400 has not yet been completed, the flow returns to step S108 to continue reception of the charge completion information on the receiver illumination apparatus 400. In a case where a plurality of the receiver illumination apparatuses 400 are connected, the illumination apparatus control unit 301 determines whether charging of all receiver illumination apparatuses 400 has been completed.

Next, in step S110, the illumination apparatus control unit 301 determines whether the illumination apparatus shoe 306 is connected to the camera ACC shoe 108, in other words, whether the sender illumination apparatus 300 is connected to the image pickup apparatus 100. In a case where it is determined that the sender illumination apparatus 300 is connected to the image pickup apparatus 100, the flow proceeds to step S111. In a case where it is determined that the sender illumination apparatus 300 is not connected to the image pickup apparatus 100, the flow returns to step S101 to continue check of various charging and wireless connection states in steps S101 to S109.

In step S111, the illumination apparatus control unit 301 determines that the sender illumination apparatus 300 is connected to the image pickup apparatus 100 and the sender illumination apparatus 300 and the receiver illumination apparatus 400 are in the charge completed state and can perform light emission. Thus, the charge completed state is transmitted to the image pickup apparatus 100 through communication from the sender illumination apparatus 300, and this flow ends. Thereafter, the sender illumination apparatus 300 waits for a light emission instruction from the image pickup apparatus 100 and continues the processing in steps S101 to S111 until the light emission instruction is issued.

Processing of each receiver illumination apparatus 400 in wireless setting will be described below with reference to FIG. 5. The description assumes a state in which the receiver illumination apparatus 400 is not connected to the image pickup apparatus 100 through an illumination apparatus shoe 406.

First in step S200, similarly to step S100, when the power switch in the illumination apparatus operation unit 303, which is illustrated in FIG. 3A, of the receiver illumination apparatus 400 is turned on and the unit becomes operable, the illumination apparatus control unit 401 performs initialization operations of memories and ports. In addition, the illumination apparatus control unit 401 reads a switch state input from the illumination apparatus operation unit 303 and input information set in advance and performs various kinds of light emission setting including setting of a light emission mode, such as modulated light emission or manual light emission, of the receiver illumination apparatus 400, and setting of a light emission value.

Next, in step S201, the illumination apparatus control unit 401 performs charging processing in which a charging control unit charges an unillustrated main capacitor with electric charge for light emission from an unillustrated power supply unit. Next, in step S202, the illumination apparatus control unit 401 detects voltage of the electric charge in the unillustrated main capacitor to determine whether the main capacitor is in a charge completed state. In a case where the main capacitor is in the charge completed state, light emission by the illumination apparatus light emitter 405 is possible.

In step S203, the illumination apparatus control unit 401 determines whether it is set to perform wireless communication. In a case where it is determined that wireless communication setting has been performed by the photographer through the illumination apparatus operation unit 303, the flow proceeds to step S204. In a case where it is determined that wireless communication setting has not yet been performed, the flow returns to step S201 to continue charging operation and charge completion sensing.

In step S204, the illumination apparatus control unit 401 determines that receiver setting has been previously performed by the photographer through the illumination apparatus operation unit 303 (403) and the illumination apparatus display unit 304 (404) as in FIG. 3A, and reads the receiver setting from an internal memory. To perform wireless communication through the illumination apparatus wireless communication unit 402, the illumination apparatus control unit 401 sets connection information such as a wireless ID and a CH used for wireless communication, and sets the illumination apparatus as a receiver illumination apparatus 400. In a case where the illumination apparatus is set as a receiver illumination apparatus 400 in step S204, the illumination apparatus functions as an illumination apparatus that receives a light emission instruction from the sender illumination apparatus 300 wirelessly connected in the multi-light illumination apparatus control system 10 and emits light.

Next, in step S205, the illumination apparatus control unit 401 reads, from the internal memory, a selected group that is previously set by the photographer through the illumination apparatus operation unit 403 and the illumination apparatus display unit 404. Next, in step S206, the illumination apparatus control unit 401 determines whether the selected group read in step S205 is set to Group A. In a case where it is determined that the read selected group is set to Group A, the flow proceeds to step S207. In a case where the read selected group is set to a group other than Group A, the flow proceeds to step S208.

In step S207, the illumination apparatus control unit 401 determines that the selected group is Group A, sets wireless group setting to Group A, and records onto the internal memory of the illumination apparatus control unit 401 again. In step S208, the illumination apparatus control unit 401 determines whether the selected group read in step S205 is Group B. In a case where the selected group is set to Group B by the photographer through the illumination apparatus operation unit 403, the flow proceeds to step S209. In a case where the selected group is set to a group other than Groups A and B by the photographer through the illumination apparatus operation unit 403, the flow proceeds to step S210.

In step S209, the illumination apparatus control unit 401 determines that group selection is set to Group B, sets the wireless group setting to Group B, and records it into the internal memory in the illumination apparatus control unit 401 again. In step S210, the illumination apparatus control unit 401 determines that group selection is set to Group C, sets the wireless group setting to Group C, and records it into the memory in the illumination apparatus control unit 401.

In steps S205 to S210, a plurality of groups for wireless light emission are three groups of Groups A, B, and C in the above description but, for example, five groups of Groups A, B, C, D, and E may be set.

Next, in step S211, based on the wireless ID and the CH set in step S204, the illumination apparatus control unit 401 searches for a sender illumination apparatus 300 wirelessly connectable with the same ID and CH. In a case where a wirelessly connectable sender illumination apparatus 300 is found, the flow proceeds to step S212. In a case where no wirelessly connectable sender illumination apparatus 300 is found, the search for a wirelessly connectable sender illumination apparatus 300 is continued.

In step S212, the illumination apparatus control unit 401 establishes wireless connection with the sender illumination apparatus 300 found in step S211. The illumination apparatus control unit 401 transmits group information (Group A, B, or C) set in the receiver illumination apparatus 400 during the wireless connection to the sender illumination apparatus 300. The illumination apparatus control unit 401 also transmits a strobe ID (ID information) unique to the receiver illumination apparatus 400 and a settable item such as a maximum light emission amount or a zoom position to the sender illumination apparatus 300 during the wireless connection.

Next, in step S213, the illumination apparatus control unit 401 determines a wirelessly connected state and the charge completed state in step S202. Thus, the wireless communication is performed through the illumination apparatus wireless communication unit 402 to transmit the charge completed state to the sender illumination apparatus 300. The sender illumination apparatus 300 receives the charge completion information on the receiver illumination apparatus 400 in step S108 described above.

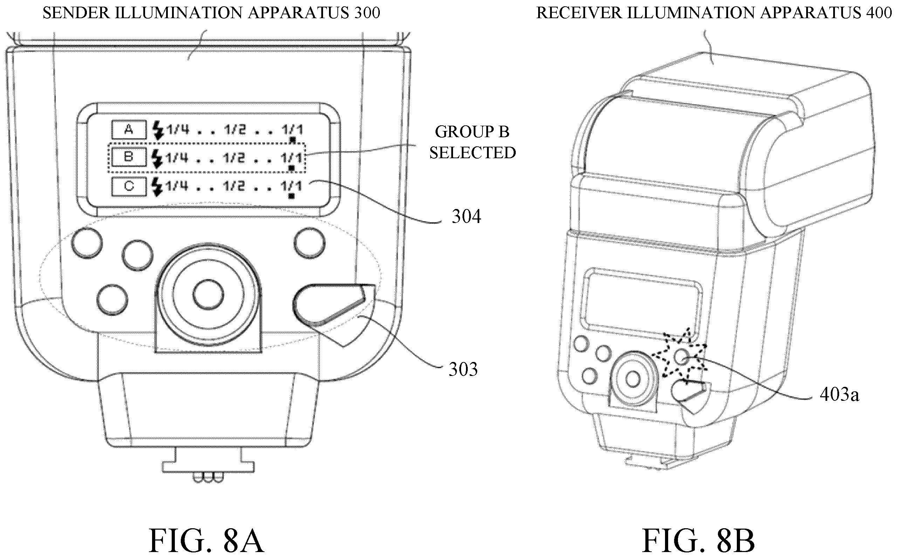

Referring now to FIGs. 6 to 8B, a description will be given of processing performed when a notification indicating a group-selected receiver illumination apparatus 400 is provided to the photographer in changing setting of a wireless group (selected group or predetermined group) of the sender illumination apparatus 300 in this embodiment. FIG. 6 is a flowchart illustrating processing of the sender illumination apparatus 300. FIG. 7 is a flowchart illustrating processing of the receiver illumination apparatus 400. FIGs. 8A and 8B are exterior diagrams of the sender illumination apparatus 300 and the receiver illumination apparatus 400 when the processing illustrated in FIGs. 6 and 7 is performed.

First in step S300 in FIG. 6, the illumination apparatus control unit 301 determines whether group selection has been performed to change setting such as the light emission light amount of each group. In a case where the photographer has performed operations by using the illumination apparatus operation unit 303 and the illumination apparatus display unit 304 illustrated in FIG. 8A and has selected a predetermined group, it is determined that group selection has been performed and the flow proceeds to step S301. In a case where it is determined that group selection has not been performed, the determination (sensing) in step S300 of whether group selection has been performed is continued. A selected group is any of Groups A, B, and C described above. In this example, Group B is selected to change setting such as the light amount of Group B by the sender illumination apparatus 300 as illustrated in FIG. 8A.

In step S301, the illumination apparatus control unit 301 transmits information regarding the selected wireless group from the sender illumination apparatus 300 to the receiver illumination apparatus 400 through wireless communication. As illustrated in FIG. 8A, the selected wireless group is a group selected by the photographer through the illumination apparatus display unit 304 and the illumination apparatus operation unit 303 to change setting such as light amount, and is Group B, for example.

Next, in step S302, the illumination apparatus control unit 301 determines whether a set value (group set value) such as the light amount of the selected wireless group has been changed. In a case where it is determined that a set value has been changed, the flow proceeds to step S303. In a case where it is determined that no set value has been changed, the flow proceeds to step S304.

In step S303, since a set value such as the light amount of the wireless group has been changed, the illumination apparatus control unit 301 transmits the changed set value from the sender illumination apparatus 300 to the receiver illumination apparatus 400 through wireless communication. The transmitted set value is a light-emission related set value such as a light emission mode, a light emission amount, or a zoom set value.

Next, in step S304, the illumination apparatus control unit 301 determines whether the wireless group selection through the sender illumination apparatus 300 has ended. In a case where it is determined that the photographer has performed an operation to end the wireless group selection by using the illumination apparatus operation unit 303 and the illumination apparatus display unit 304 as illustrated in FIG. 8A and the group selection has ended, the flow proceeds to step S305. In a case where it is determined that the wireless group selection has not been ended, the flow returns to step S302 to continue the processing in steps S302 to S304.

In step S305, as a result of the end of the wireless group selection processing determined in step S304, the illumination apparatus control unit 301 transmits information indicating the end of the wireless group selection from the sender illumination apparatus 300 to the receiver illumination apparatus 400 through wireless communication.

Processing of the receiver illumination apparatus 400 will be described below with reference to FIG. 7. First in step S400, the illumination apparatus control unit 401 receives information regarding the state of wireless group selection, which is transmitted from the sender illumination apparatus 300 through wireless communication in step S301 described above. Then, in a case where it is determined that information regarding the state of wireless group selection has been received, the flow proceeds to step S401. In a case where it is determined that no information regarding the state of wireless group selection has been received, the process continues step S400.

In step S401, the illumination apparatus control unit (determining unit) 401 determines whether the information regarding the state of wireless group selection and received in step S400 indicates a wireless group that is set to the receiver illumination apparatus 400 and stored in the memory of the illumination apparatus control unit 401. In other words, the illumination apparatus control unit 401 determines whether the receiver illumination apparatus 400 belongs to a wireless group (predetermined group) through wireless communication. In a case where it is determined that the wireless group received in step S400 is a group (target group) stored in the memory of the illumination apparatus control unit 401, the flow proceeds to step S402. In a case where it is determined that the received wireless group is not a target group, the flow returns to step S400 to continue the reception of information regarding the state of wireless group selection.

In step S402, the illumination apparatus control unit 401 determines that the wireless group received in step S401 is a target group set to the receiver illumination apparatus 400, and starts group notification. As an example of the group notification, the photographer is notified by flashing an LED illumination of a particular operation button 403a of the receiver illumination apparatus 400 as illustrated in FIG. 8B. Thereby, the photographer can recognize which illumination apparatus is a target receiver illumination apparatus 400 assigned to Group B being selected on the sender illumination apparatus 300.

Next, in step S403, the illumination apparatus control unit 401 determines whether information regarding a set value change (setting change value) of a light amount or the like from the sender illumination apparatus 300 to the receiver illumination apparatus 400 in step S303 described above has been received. In a case where it is determined that information regarding a set value change has been received, the flow proceeds to step S404. In a case where it is determined that no information regarding a set value change has been received, the flow proceeds to step S405.

In step S404, the illumination apparatus control unit 401 determines that a set value of a light amount or the like has been changed in step S403, and updates a set value of a light emission or the like stored in the memory of the illumination apparatus control unit 401 with a received set value. Then, the illumination apparatus control unit 401 displays the updated set value (setting change value) on the illumination apparatus display unit 404.

Next, in step S405, the illumination apparatus control unit 401 determines whether the information on the group selection end transmitted from the sender illumination apparatus 300 to the receiver illumination apparatus 400 in step S305 described above has been received. In a case where it is determined that the information indicating group selection end has been received, the flow proceeds to step S406. In a case where it is determined that no information indicating group selection end has been received, the flow returns to step S402 to continue the present processing.

In step S406, as processing for group selection end received in step S405, the illumination apparatus control unit 401 ends the group notification started in step S402. Since the group notification in an example of this embodiment is flashing of the LED illumination of the operation button 403a as illustrated in FIG. 8B, the illumination returns to a state before the notification is started. For example, the illumination is set to a turn-off state in a case where the illumination has been turned off before the group notification is started, or the illumination is returned to a turn-on state in a case where the illumination has been turned on before the group notification is started.

In this embodiment, in step S301 in FIG. 6, the illumination apparatus control unit 301 transmits a group (predetermined group) selected in step S300 to the receiver illumination apparatus 400. Then, in a case where it is determined that the receiver illumination apparatus 400 belongs to the predetermined group in step S401 in FIG. 7, the notifying unit of the receiver illumination apparatus 400 starts a notification that the apparatus belongs to the predetermined group in step S402.

However, this embodiment is not limited to this example. Between steps S301 and S302 (right after step S301), the illumination apparatus control unit 301 may interpose processing of transmitting, to a receiver illumination apparatus 400 belonging to a selected group (predetermined group), an instruction to turn on display indicating the selected group. That is, the illumination apparatus control unit 301 may instruct the receiver illumination apparatus 400 through wireless communication to notify that the receiver illumination apparatus 400 belongs to the predetermined group. In this case, the receiver illumination apparatus 400 belonging to the predetermined group starts a notification in step S402 in accordance with the instruction from the illumination apparatus control unit 301.

In this manner, the sender illumination apparatus 300 may be configured to set, to a receiver illumination apparatus 400, whether to perform notification. That is, the sender illumination apparatus 300 issues an instruction to perform notification to a receiver illumination apparatus 400, and the receiver illumination apparatus 400 performs notification based on the instruction from the sender illumination apparatus 300. Alternatively, the sender illumination apparatus 300 may instruct a receiver illumination apparatus 400 belonging to a selected group not to perform notification. In this case, the receiver illumination apparatus 400 does not perform notification based on the instruction.

This embodiment performs notification by flashing the operation button 403a as an example of selected group notification, but may use another display method such as flashing of backlight of an LCD display of the illumination apparatus display unit 404 or flashing of the modeling light 407. Moreover, for example, a plurality of notifying units may be used instead of a single notifying unit to enhance noticeability for the photographer.

In this embodiment, notification may involve not only turning on or flashing light such as LED light but also changing a light state (such as light amount or color). In a case where a plurality of groups are selected, notification may be performed by different methods for the respective selected groups, such as turning on or flashing LED lights of different colors. Notification may be performed not only by light but also by color, sound such as a buzzer, or operation (such as drive operation of the illumination apparatus head portion 309) of any illumination apparatus belonging to each selected group.

In this embodiment, notification may continue while the sender illumination apparatus 300 selects a group (from start to end of group selection), or notification may be performed only during setting change. The receiver illumination apparatus 400 may stop notification when no setting change instruction, group selection end instruction, or the like has been received for a certain duration.

This embodiment displays no notification since the sender illumination apparatus 300 is automatically set to Group A, but it may be set that a group can be selected from among Groups A, B, and C for the sender illumination apparatus 300 by the photographer and notification may be displayed.

As described above, in the multi-light illumination apparatus control system 10 according to this embodiment, notification is performed by LED flashing or the like from any receiver illumination apparatus 400 of a selected group when the photographer changes setting such as the light emission mode or the light amount of the group of the illumination apparatus. Thereby, the photographer can issue a setting-related instruction such as a change of light amount setting while easily recognizing a group to which each receiver illumination apparatus 400 installed at a separated place is set.

### SECOND EMBODIMENT

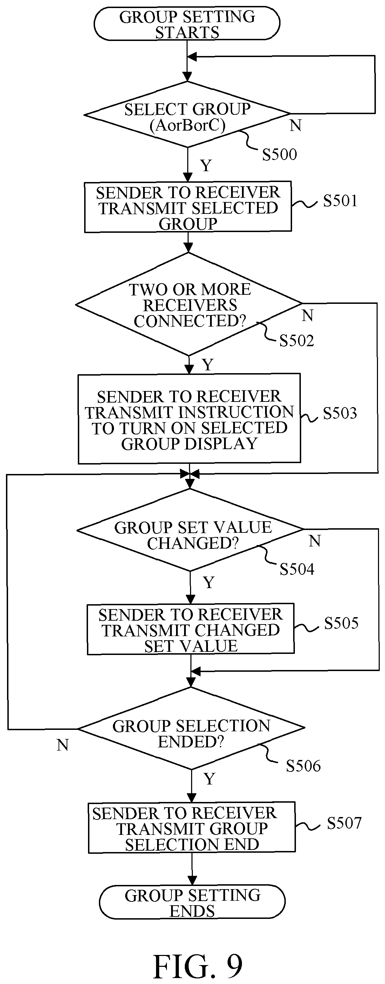

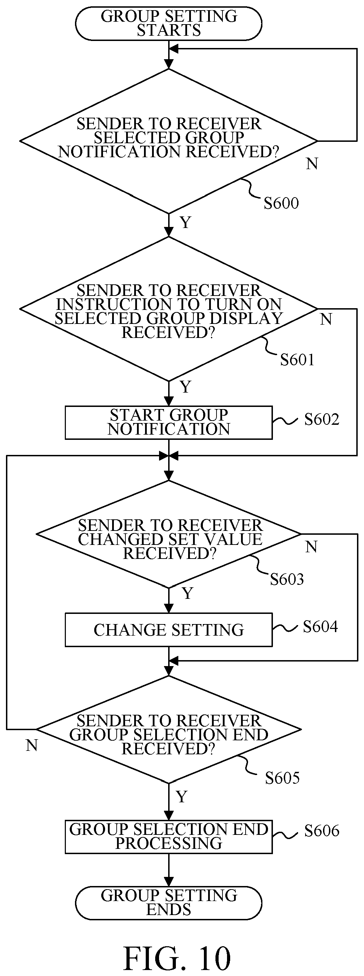

Referring now to FIGs. 9 and 10, a description will be given of a multi-light illumination apparatus control system according to a second embodiment of the present disclosure. In this embodiment, notification is not performed in a case where a set group is clear, for example, the number of connected receiver illumination apparatuses 400 is one.

FIG. 9 is a flowchart illustrating processing of the sender illumination apparatus 300. In FIG. 9, steps S500, S501, and S504 to S507 correspond to steps S300 to S305, respectively, in FIG. 6, and thus a description thereof will be omitted.

In step S502, the illumination apparatus control unit 301 determines whether two or more receiver illumination apparatuses 400 are connected. The illumination apparatus control unit 301 detects (determines) the number of receivers connected in the wireless connection processing in FIG. 4 by the illumination apparatus wireless communication unit 302. In a case where it is determined that two or more receiver illumination apparatuses 400 are connected, the flow proceeds to step S503. In a case where it is determined that only one receiver illumination apparatus 400 is connected, the flow proceeds to step S504.

In step S503, the illumination apparatus control unit 301 transmits an instruction to turn on display indicating a selected group to any receiver illumination apparatus 400 of a target group selected in step S500 through wireless communication using the illumination apparatus wireless communication unit 302.

FIG. 10 is a flowchart illustrating processing of the receiver illumination apparatus 400. In FIG. 10, steps S602 to S605 correspond to steps S402 to S405, respectively, in FIG. 7, and thus a description thereof will be omitted.

In step S600, the illumination apparatus control unit 401 determines whether selected group notification has been received from the sender illumination apparatus 300 to the receiver illumination apparatus 400 through wireless communication. In a case where it is determined that selected group notification has been received, the flow proceeds to step S601. In a case where it is determined that no selected group notification has been received, the flow continues step S600. This step is a step of receiving a selected group transmitted from the sender illumination apparatus 300 in step S501 in FIG. 9.

In step S601, the illumination apparatus control unit 401 determines whether the instruction to turn on selected group display has been transferred from the sender illumination apparatus 300 to the receiver illumination apparatus 400 through wireless communication in step S503 described above and received. In a case where it is determined that the turn-on instruction has been received, the flow proceeds to step S602. In a case where it is determined that the turn-on instruction has not been received, the flow proceeds to step S603.

In step S602, the illumination apparatus control unit 401 notifies the selected group. In this embodiment, similarly to step S402 described above, the selected group is notified by flashing the operation button 403a illustrated in FIG. 8B.

In step S606, the illumination apparatus control unit 401 performs processing for group selection end received from the sender illumination apparatus 300 in step S605. In the group selection end processing of this embodiment, flashing display of the operation button 403a is ended in a case where the flashing is performed in step S602. In a case where the instruction to turn on selected group display has not been received from the sender illumination apparatus 300 in step S601, flashing display of the operation button 403a or the like is not performed. Thus, in a case where any other display of a selection state is performed on the illumination apparatus display unit 404, the display is ended. In addition, for example, processing in steps S603 to S605 performed inside the illumination apparatus control unit 401 to wait for selection or setting change is ended.

This embodiment does not display notifying the photographer of a selected group in a case where only one receiver illumination apparatus is connected. That is, in a state in which the illumination apparatus wireless communication unit 302 is connected to only one receiver illumination apparatus 400, the illumination apparatus control unit 301 instructs the receiver illumination apparatus 400 not to perform notification in a case where an instruction regarding setting of the receiver illumination apparatus 400 is issued. Thereby, in a case where a set group in which only one receiver illumination apparatus is connected is clear, a multi-light illumination apparatus control system that performs light emission for the illumination apparatus without unnecessarily turning on LED illuminations or the like and consuming electric power.

### THIRD EMBODIMENT

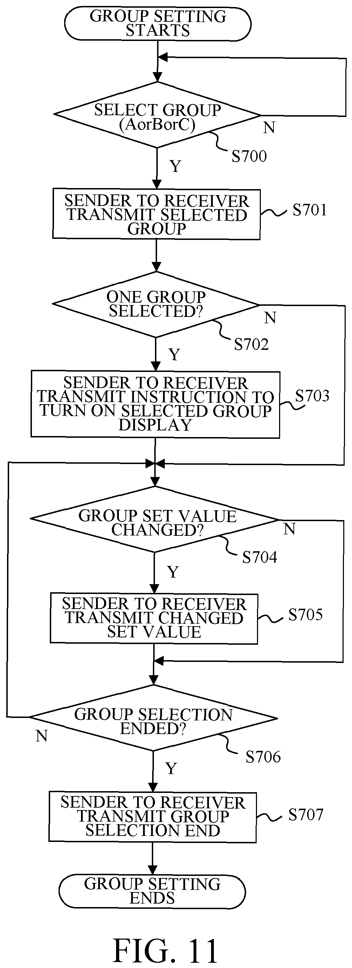

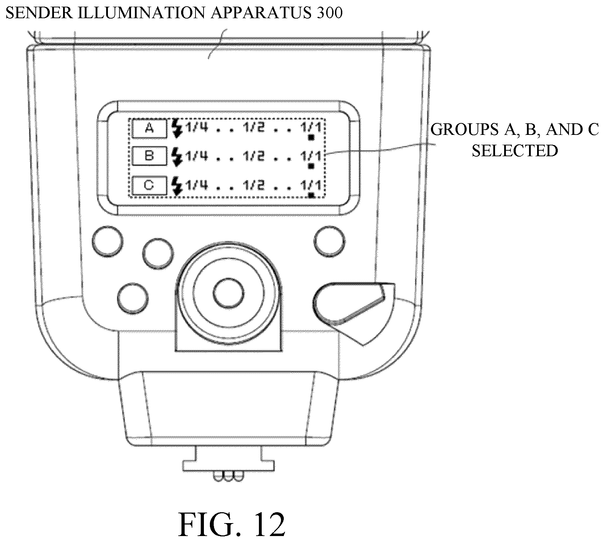

A multi-light illumination apparatus control system according to a third embodiment of the present disclosure will be described below with reference to FIGs. 11 and 12. In this embodiment, notification is not performed in a case where, for example, setting change is performed while a plurality of groups are selected in group selection on the sender illumination apparatus 300.

FIG. 11 is a flowchart illustrating processing of the sender illumination apparatus 300. In FIG. 11, steps S700, S701, and S704 to S707 correspond to steps S300 to S305, respectively, in FIG. 6, and thus a description thereof will be omitted. Moreover, processing performed by each receiver illumination apparatus 400 for processing performed by the sender illumination apparatus 300 in FIG. 11 is similar to that in FIG. 10 described above, and thus a description thereof will be omitted. FIG. 12 is an exterior diagram of the sender illumination apparatus 300 in a case where the processing in FIG. 11 is performed by the sender illumination apparatus 300.

In step S702 in FIG. 11, the sender illumination apparatus 300 determines whether group selection performed by the photographer is selection of only a single group. In a case where it is determined that only a single group has been selected, the flow proceeds to step S703. In a case where it is determined that a plurality of groups are selected, the flow proceeds to step S704. In this embodiment, for example, as illustrated in FIG. 12, the photographer can perform selection from among a plurality of groups of Groups A, B, and C through the illumination apparatus operation unit 303 and the illumination apparatus display unit 304.

The photographer may select a plurality of groups and perform operations to simultaneously change setting of light emission amounts or the like. Then, in a case where a plurality of groups are selected as illustrated in FIG. 12, it is determined that a plurality of groups are selected in step S702, and the flow proceeds to step S704. In this case, step S703 is skipped, and accordingly, no instruction to turn on selected group display is transmitted from the sender illumination apparatus 300 to the receiver illumination apparatuses 400, and no flashing or the like indicating a selected group is performed at each receiver illumination apparatus 400.

This embodiment does not perform display for notifying the photographer of selected groups in a case where a plurality of groups are selected on the sender illumination apparatus 300 to change setting of light emission amounts or the like. That is, while the sender illumination apparatus 300 is connected to a plurality of receiver illumination apparatuses 400 belonging to a plurality of groups and the sender illumination apparatus 300 accepts an operation with the plurality of groups designated as the predetermined group, these receiver illumination apparatuses 400 are instructed not to perform notification. Thereby, a multi-light illumination apparatus control system can be provided that prevents unnecessary consumption of electric power by avoiding flashing LED illuminations or the like in a case where it is not needed to notify the photographer of selected groups, for example, when a plurality of groups are selected.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that the disclosure is not limited to the example embodiments. The scope of the following claims is to be accorded the broadest interpretation so as to encompass all such modifications and equivalent structures and functions.

Each embodiment can provide a control apparatus that enables a photographer to easily recognize a group that is set to an illumination apparatus.

## Claims

1. A control apparatus (300) configured to control at least one illumination apparatus (400) through wireless communication, the control apparatus comprising:
a communication unit (302) configured to perform the wireless communication with the at least one illumination apparatus;
an operation unit (303) configured to accept an operation regarding setting of an illumination apparatus belonging to a predetermined group among the at least one illumination apparatus; and
a control unit (301) configured to:
issue an instruction regarding the setting to the illumination apparatus belonging to the predetermined group through the communication unit in accordance with the operation, and
instruct the illumination apparatus to notify that the illumination apparatus belongs to the predetermined group.

2. The control apparatus according to claim 1, **characterized in that** the communication unit is connected only to a single illumination apparatus, and
wherein in a case where the processor has issued the instruction regarding the setting to the illumination apparatus, the processor is configured to instruct the illumination apparatus not to perform a notification that the illumination apparatus belongs to the predetermined group.

3. The control apparatus according to claim 1 or 2, **characterized in that** the communication unit is connected to a plurality of illumination apparatuses belonging to a plurality of groups, and
wherein in a case where the operation unit accepts the operation with the plurality of groups designated as the predetermined group, the processor is configured to instruct the plurality of illumination apparatuses not to perform a notification that the illumination apparatus belongs to the predetermined group.

4. The control apparatus according to any one of claims 1 to 3, **characterized in that** the predetermined group is at least one group selected by a user.

5. The control apparatus according to any one of claims 1 to 4, further comprising:
an illumination unit (305); and
a notifying unit (304),
**characterized in that** in a case where the control apparatus including the illumination unit belongs to the predetermined group, the notifying unit notifies that the control apparatus belongs to the predetermined group.

6. The control apparatus according to any one of claims 1 to 5, **characterized in that** a notification that the illumination apparatus belongs to the predetermined group is made using light, color, sound, or motion.

7. An illumination apparatus (400) to be controlled by a control apparatus through wireless communication, the illumination apparatus comprising:
a communication unit (402) configured to perform the wireless communication with the control apparatus;
a notifying unit (407) configured to notify that the illumination apparatus belongs to the predetermined group; and
a determining unit (401) configured to determine whether the illumination apparatus belongs to a predetermined group through the wireless communication,
wherein the notifying unit notifies that the illumination apparatus belongs to the predetermined group in a case where it is determined that the illumination apparatus belongs to the predetermined group.

8. The illumination apparatus according to claim 7, **characterized in that** a notification that the illumination apparatus belongs to the predetermined group is made using light, color, sound, or motion.

9. An illumination system (10) comprising:
at least one illumination apparatus (400); and
a control apparatus (300) configured to control the at least one illumination apparatus through wireless communication,
**characterized in that** the control apparatus includes:
a first communication unit (302) configured to perform the wireless communication with the at least one illumination apparatus;
an operation unit (403) configured to accept an operation regarding setting of an illumination apparatus belonging to a predetermined group among the at least one illumination apparatus; and
a control unit (401) configured to issue an instruction regarding the setting to the illumination apparatus belonging to the predetermined group through the first communication unit in accordance with the operation,
wherein the at least one illumination apparatus includes:
a second communication unit (402) configured to perform the wireless communication with the control apparatus;
a notifying unit (407) configured to notify that the illumination apparatus belongs to the predetermined group, and
a determining unit (401) configured to determine whether the illumination apparatus belongs to the predetermined group through the wireless communication,
wherein the notifying unit notifies that the illumination apparatus belongs to the predetermined group in a case where it is determined that the illumination apparatus belongs to the predetermined group.

10. The illumination system according to claim 9, **characterized in that** a notification that the illumination apparatus belongs to the predetermined group is made using light, color, sound, or motion.

11. A control method of controlling at least one illumination apparatus (400) through wireless communication, the control method comprising:
performing the wireless communication with the at least one illumination apparatus;
accepting an operation regarding setting of an illumination apparatus belonging to a predetermined group among the at least one illumination apparatus;
issuing an instruction regarding the setting to the illumination apparatus belonging to the predetermined group through the wireless communication in accordance with the operation;
instructing, in a case where the instruction regarding the setting has been issued, the illumination apparatus to notify that the illumination apparatus belongs to the predetermined group.

12. A control method for an illumination apparatus (400) to be controlled by a control apparatus (300) through wireless communication, the control method comprising:
performing the wireless communication with the control apparatus;
determining whether the illumination apparatus belongs to a predetermined group through the wireless communication; and
notifying that the illumination apparatus belongs to the predetermined group in a case where it is determined that the illumination apparatus belongs to the predetermined group.

13. A control method for an illumination system including at least one illumination apparatus (400) and a control apparatus (300) configured to control the at least one illumination apparatus through wireless communication, the control method comprising:
accepting an operation regarding setting of an illumination apparatus belonging to a predetermined group among the at least one illumination apparatus;
issuing an instruction regarding the setting to the at least one illumination apparatus through the wireless communication in accordance with the operation;
determining whether the at least one illumination apparatus belongs to the predetermined group through the wireless communication; and
notifying that the at least one illumination apparatus belongs to the predetermined group in a case where it is determined that the at least one illumination apparatus belongs to the predetermined group.

14. A program that causes a computer to execute the control method according to claim 11.

15. A program that causes a computer to execute the control method according to claim 12.

16. A program that causes a computer to execute the control method according to claim 13.
